# EUROPEAN PATENT SPECIFICATION

(11) **EP 3 361 200 B1**
(45) Date of publication and mention of the grant of the patent: **12.05.2021**
(21) Application number: 18155882.6
(22) Date of filing: 08.02.2018
(51) Int. Cl.: F28D 5/00, F24F 5/00, F28F 27/00, F24F 1/0007, F28B 9/06, F28B 9/08, F28F 25/08, F24F 1/00

(54) **WATER RECIRCULATION SYSTEM**
WASSERRÜCKFÜHRSYSTEM
SYSTÈME DE RECIRCULATION D'EAU

(30) Priority: 05.02.2018 US 201715888938; 09.02.2017 US 201762456873 P
(43) Date of publication of application: 15.08.2018
(73) Proprietor: Baltimore Aircoil Company, Inc., Jessup, MD 20794 (US)
(72) Inventor: HOLLANDER, Philip, Silver Spring, MD Maryland 20902 (US); MARTELL, Gregory, Baltimore, MD Maryland 21234 (US); UYTTERHOEVEN, Wim, 2500 Lier (BE); VAN DIJCK, Thomas, 2500 Lier (BE); AARON, David Andrew, Reisterstown, MD Maryland 21136 (US)
(74) Representative: Dehns

(56) References cited:
- WO-A1-2008/151377
- US-A- 5 121 768
- US-A1- 2005 012 230
- US-A1- 2016 069 577

## Description

### RELATED APPLICATIONS

### TECHNICAL FIELD

This application relates generally to employing liquid recirculation system for an adiabatic cooler (e.g., a condenser). More specifically, this application relates to employing primary evaporative mode and a once-through back-up method for the wetting of adiabatic evaporative material or evaporative pads for applications involving the evaporative cooling of air.

### BACKGROUND

Generally, in any cooling arrangement that employs adiabatic material for effecting the evaporative cooling of air, the adiabatic material or evaporative pads are arranged substantially vertical. Moisture, usually water, is deposited on an upper portion of the evaporative pads and by the force of gravity, the moisture gradually descends across the evaporative pads giving the water a chance to be absorbed into the evaporative material. For proper wetting of the evaporative pads, a sufficient amount of moisture is required to saturate the evaporative material in order to achieve the maximum evaporative cooling effect possible that results from forcing air through the saturated evaporative material. As air is forced through the adiabatic material, it is cooled by the action of evaporation. As this occurs, the amount of moisture absorbed into the adiabatic material reduces as the moisture in liquid form is vaporized hence cooling the air passing through the adiabatic material by extracting thermal energy from same in order to vaporize the water. Any water that is not absorbed into the evaporative pads is called run-off and this is primarily pumped back to the top of the evaporative pads to save water.

There are two methods commonly used to deposit water over the top of the evaporative pads. The first method employs a water recirculation system that is designed to pump run-off water from a sump and recirculate it up to the evaporative pads. As water is evaporated, the decreased water level in the sump is sensed and the evaporated water is replaced by adding make-up water to either the sump or directly to the top of the evaporative pads as is known in the art. Such as the systems disclosed, for example, in patent application WO2008/151377 and US Patent Application Publication No. 2016/0069577 The amount of make-up water necessary is usually monitored by a sump float switch. The float switch is set to ensure a minimum amount (height) of water exists which is required to maintain a positive head of water pressure to allow proper pump operation.

The second method used to deposit water over the top of the evaporative pads is called a "once-through" system so termed because the water that is deposited to the top of the evaporative pads is not recirculated but it travels only once through the system. In the once-through system, fresh water is deposited to the top of the evaporative pads by energizing a make-up solenoid valve any time the pads are desired to be wetted. In the once-through system, any excess water not absorbed by the pads goes down the drain. Examples of such systems are disclosed in US Patent No. 5,121,768 and in US Patent Application No. 2005/0012230. While the once-through system is simpler and less expensive in initial cost, it uses more water.

### SUMMARY

This application describes liquid distribution systems, and cooling devices or cooling systems that employ liquid distribution systems. In one example, the liquid distribution system includes an inlet configured to allow evaporative liquid into the liquid distribution system. The inlet may, for example, allow liquid to enter from a water source, such as a municipal water supply. The system also includes a dispenser positioned to distribute evaporative liquid over an evaporative pad of the cooling device. The dispenser may include a plurality of dispensing devices (e.g., nozzles, sprayers, or the like), and may be fed from a plurality of different sources, via multiple lines or conduits. A make-up valve regulates the flow of evaporative liquid between the inlet and the dispenser. A sump is positioned to collect evaporative liquid that runs off the evaporative pad, and may include a drain valve and a liquid level monitor. A pump is in fluid communication with the sump and the dispenser, and is configured to force liquid there between (e.g., via a conduit or pipe). A controller, which may include a processor or multiple processors, is in communication with the make-up valve, the pump, and the sump, including the drain valve and the sensors associated with the sump. The controller may be in communication with a variety of other devices and sensors associated with the system.

The controller controls the liquid distribution system to operate among one of a plurality of operating modes, including a recirculation mode and a once-through mode. The primary mode of operation involves closing the make-up valve and operating the pump to distribute evaporative liquid from the sump to the dispenser. The once-through mode of operation involves disabling the pump and opening the make-up valve to allow evaporative liquid to be drawn from the inlet to the dispenser. The controller is configured to select a particular operating based at least in part on monitored parameters of the system, for example, the monitored level of evaporative liquid in the sump, the amount of time that the sump has been filling, and the position of the drain valve of the sump, to name a few examples. The controller may also be configured to control or adjust the positions of valves of the system (e.g., the make-up valve, the drain valve, check valves in line with the pump, etc.), the operation of the pump, and the operation of other equipment of an associated cooling system, such as an air flow generator (e.g., a fan).

### BRIEF DESCRIPTION OF THE DRAWINGS

Embodiments of the invention will now be described with reference to the accompanying Figures in which:
Figure 1 is a diagrammatic representation of a cooling system incorporating a water recirculation system and a once-through back-up cycle according to a first embodiment of the invention;
Figure 2 is a diagrammatic representation of cooling system incorporating a water recirculation system and a once-through back-up cycle according to a second embodiment of the invention;
Figure 3 is a side view representation of the cooling system of Figure 2 providing a side view of an embodiment with a dual pipe feed arrangement.
FIG 4 is a side view representation of the cooling system of Figure 2 providing a side view of an embodiment with a water basin feed arrangement.
FIG 5 is a flow diagram of program logic to determine when to switch modes of operation according to all embodiments of the invention.

### DETAILED DESCRIPTION

This application describes a recirculation system that operates in a primary mode for evaporatively cooling air, and in a secondary/backup mode that operates as a once-through system. The circulation system operates in both a primary mode of operation (called the water recirculation cycle) and in a secondary, or back-up (also called a "once-through") mode of operation. The system may also include and/or operate in connection with a software system that is capable of making decisions for unit operation such that it follows the following logical sequence.

There are advantages to both the primary recirculation and once-through methods of delivering water to the evaporative pads. The described system combines the two methods to be used as desired by introducing a controller or control system that applies control logic to operate the system in whichever mode is desired. The recirculation mode is the primary mode because it saves water and the once-through mode serves as a back-up method to wet the evaporative pads should anything fail on the water recirculation system.

It should be understood that in many embodiments, the evaporative liquid that is recirculated may be water; however, other liquids could also be used. Thus, while the term "water" may be applied in descriptions of certain examples and embodiments, it should be understood that the term could be replaced with the more generic "evaporative liquid" without veering from the scope of the description.

With either the water recirculation or once-through systems, it is difficult to determine the precise amount of liquid that evaporates as the air is cooled, so it is generally accepted that the evaporative material should remain saturated with moisture and be constantly supplied with additional moisture during the evaporative cooling process. As a result, an oversupply of moisture is purposely deposited on an upper portion of the evaporative material, hereafter called evaporative pads, and the excess moisture, generally referred to as run-off, is collected in a trough arrangement disposed beneath the lower portion of the evaporative pads. In the water recirculation system, a sump collects the run-off moisture and a pump extracts the run-off moisture from the sump and re-deposits it onto an upper portion of the evaporative pads generally through a water distribution arrangement. In the once-through system, any excess water not absorbed by the pads goes down the drain.

During operation, the water recirculation system loses water through vaporization as it cools the air forced through the adiabatic material. During the process of vaporization, any sediment or soluble impurities in the water are not vaporized, thus, over time, the concentration of these impurities gradually increases. The impurities in the water may also include microbial impurities that can collect in the sump and promote the growth of bacteria in the sump. In order to reduce the fouling of the sump water, it is common practice to "dump" and "flush" the contents of the sump on a regular basis called the flush mode. It is generally considered an industry practice to dump and flush the sump contents at least once every 12-24 hours of operation. In some cases, a conductivity sensor may be used to initiate the dump cycle as known in the art.

In the water recirculation method, when the water recirculation pump fails or the water recirculation system fails to pump water to the top of the evaporative pads for any reason, the pads dry out and the evaporative pads cannot provide the proper pre-air-cooling needed to satisfy the cooling of the dry heat exchanger(s). When this occurs, customers are left running at higher than desired compressor pressures or system temperatures which causes a loss of capacity, more energy consumption or may also not satisfy the refrigeration loads. Employing a reliable diagnostic system to detect when the water recirculation system has failed to operate properly and employing a once-through back-up system to the water recirculation method without introducing any new hardware is therefore desirable. This described systems combine the once-through and water recirculation methods to save the most amount of water possible while having a back-up system should the water recirculation fail to pump water over the evaporative pads. To reduce hardware and simplify the control logic, the make-up water is fed to the top of the evaporative pads for all embodiments presented.

In some embodiments, there is another attempt to save water when the request-for-wet-operation is no longer needed when the water recirculation pump was previously running. When this condition occurs, the make-up valve is closed and an attempt is made to use any remaining water in the recirculation system before the water recirculation pump operation is terminated and the drain valve is opened. Thus, some aspects of the described systems provide a primary water-recirculation cycle, a sensing means to detect when the water-recirculation has failed or is not operating satisfactorily, and a once-through back-up cycle for the continued wetting of evaporative pads.

In some aspects, the described systems are configured to send an alarm when the primary mode of water-recirculation cycle has failed to operate correctly. Further, the system may provide a primary water-recirculation cycle, a sensing device that detects when the water-recirculation has failed or is not operating satisfactorily, and a once-through back-up cycle for continued wetting of evaporative pads and to use the same components differently to operate both cycles without requiring additional hardware. Further, the system may be configured to use up all water possible when transitioning from the water pump recirculation cycle to the dry cycle by leaving the water recirculation pump run until the water level reaches a point where the make-up needs to add water.

In one embodiment, a system operates in a primary water-recirculation mode for evaporatively cooling air, and in a secondary once-through mode. The system includes a sump for collecting and storing water run-off from the evaporative pads, and a pump in fluid communication with the sump. The sump transfers moisture from the sump to the distribution arrangement located at the top of the evaporative pads. The system also includes an automatically operated make-up water valve that delivers water to the distribution arrangement located at the top of the evaporative pads. A moisture distribution arrangement distributes moisture to the top of the evaporative pads, and an automatically operated sump drain valve retains water in the sump when closed and freely drains water from the sump when open. The system includes a water level control for communicating the water level in the sump to the controller, and a monitoring mechanism (e.g., a sensor) for detecting the water-recirculation system has failed to operate correctly. The circulation system operates in a primary mode of operation (called the water recirculation cycle) and in a back-up mode of operation (called the once-through cycle). The system may also include and/or operate in connection with a software system that is capable of making decisions for unit operation such that it follows the following logical sequence.

On a call for cooling, that is, a call for the dry coils to cool or condense an internal fluid, the fans pull or push the air through the dry coils turns on. These fans may be adjustable in speed. Upon determining that the fans alone cannot cool the process fluid inside the dry coils, a request for wet operation can be initiated. The decision to initiate wet operation can be decided by many factors such as ambient air temperature, process fluid temperature or pressure, fan speed or a combination of these inputs and is not a limitation of the invention. On a request for wet operation (e.g., when the air entering the cooling coils or any indirect air over heat exchanger needs to be precooled by the evaporative pads to increase the heat rejected by the dry coils), the water recirculation cycle can be initiated. At this point, the make-up valve can open to feed water to the top of the evaporative pads, the drain valve can be closed, and a water fill timer can be initiated. It should be noted that the use of "cooling coil" or "coil" throughout this application may refer to a conduit that is coiled or wound as is customary in cooling systems. However, it should also be understood that such terms may also refer to other techniques for transporting a liquid that is to be cooled or compressed in a cooling system or device. For example, the terms "cooling coil" or "coil" may refer to heat exchanger cassettes, plates, fill, or other modes of operation that are known to be applied in cooling towers or cooling systems.

The control system, or controller, may include a processing device (or multiple processing devices) configured to execute software or other control logic as described herein. The controller communicates with sump float switch, and if the water level read by the float switch is determined to be below a predetermined low set point, the system determines whether the water filler timer has expired. If the timer has not expired, then the pump remains off and the make-up valve remains on. The control system continually checks the sump water level until either the water fill timer expires or until the sump water level reaches a predetermined high level. If the high water level is reached before the water fill timer has expired, then the water recirculation pump is turned on and the make-up is turned off. If the water fill timer has expired before the sump water level reaches the high level, then an alarm is sent to the customer and the once-through back up cycle is initiated (this mode of operation will be discussed below).

Once the water recirculation pump comes on, the control logic determines whether the pumps are running properly, which can be verified directly using a flow switch located in the discharge line of the water recirculation pump or by several other methods. As long as the water recirculation pump is on and water flow has been verified, the system may determine that there are no alarms, and the control system will continue to monitor the water level in the sump so that the make-up valve can be opened should the water level drop due to evaporation of water in the evaporative pads. In some instances, this is the normal and primary mode of operation.

At any time when the water pump is turned on and the water flow switch shows a loss of water flow, such as with a pump failure, the system can enable an alarm and initiate the once-through back-up cycle. The once-through back up cycle turns off the pump, opens the sump drain valve, opens the make-up valve and sends an alarm to the customer. In this mode, the control system pre-cools the air from the evaporative pads by depositing make-up water to the evaporative pads and any run-off water exits the sump drain valve (and therefore is not recirculated). At this point, a once-through-check-timer can be initiated to keep the system in the once-through back-up cycle for a predetermined but adjustable period. Once the once-through-check-timer has expired, the control logic will attempt to return the unit to normal water recirculation operation and check for proper component function. The reason for this function is to determine if the initial fault that prompted the once-through mode has since been corrected (for example some debris that caused a fault has been cleared, a failed component has been replaced or the water has been restored and a technician did not manually reset the system). In this way, the building owner will have the confidence that the system will automatically go back to the water savings mode of operation if the issue causing the problem has been repaired.

In another embodiment, a system includes a sump for collecting and storing water run-off from the evaporative pads, and a pump in fluid communication with the sump. The pump transfers moisture from the sump to a first distribution arrangement located at the top of the evaporative pads. The system also includes an automatically operated make-up water valve which delivers water to a second distribution arrangement located at the top of the evaporative pads. First and second moisture distribution arrangements distribute moisture to the top of the evaporative pads. An automatically operated sump drain valve which retains water in the sump when closed and freely drains water from the sump when open. The system includes a water level control for communicating the water level in the sump to the control system, and a detector or sensor for detecting whether the water-recirculation system has failed to operate correctly. The system includes a processing device that operates software system capable of making decisions for unit operation.

There are at least three embodiments that utilize the sensing of proper operation of the water recirculation system and automatic transfer to the once-through back-up control system logic. In the first embodiment, the make-up water is introduced into the same discharge conduit leaving the water recirculation pump. A check valve is located between the make-up water entry point and the pump outlet to prevent make-up water from draining backwards through the pump. In the second and third embodiments, the make-up water is delivered to a separate delivery point at the top of the evaporative pads thus eliminating the need for the check valve. All three techniques employ the water recirculation system as the primary means to provide water to the top of the evaporative pads and employ a monitoring control system which detects when the water recirculation system has malfunctioned and a control system that switches from the water recirculation cycle to the once-through cycle until service is performed and the control logic alarm is reset.

While a water flow switch can be directly used to prove the water recirculation pump is working, there are alternative methods to determine if the pump or water recirculation system is properly working. These alternative methods include a water flow switch, water flow sensor, water distribution basin level switch or sensor, current or KW switch, current sensor, conductivity sensor, pressure or differential pressure switch, temperature sensors before/after the evaporative pads, and evaporative pad wetness sensors. Any of these sensors or a combination of these sensors may be employed to detect proper operation of the water recirculation system and is not a limitation of the invention.

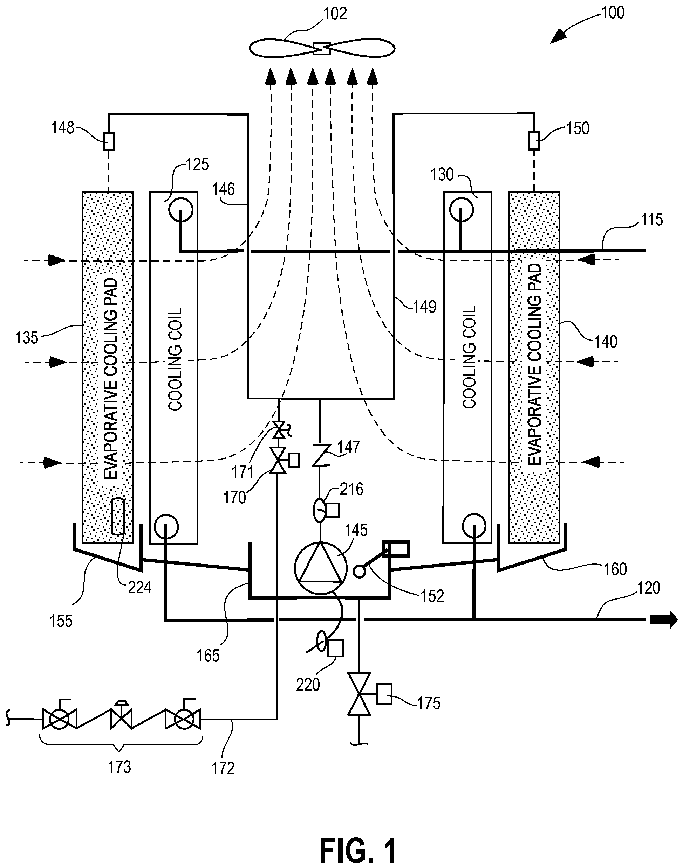

Turning now to the Figures, Figure 1 shows a cooling system 100 where a fluid to be cooled or condensed is passed internally through conduits including cooling coils 125, 130 through conduit 115. The internal fluid to be cooled or condensed may be water or a water/glycol mixture or any refrigerant that needs to be cooled or condensed. Cooling coils 125 and 130 may be tubes with fins or microchannel design. As noted above, cooling coils 125 and 130 may be a condenser or any indirect heat exchanger which has air passing across it to reject heat to the atmosphere. As the fluid passes through the cooling coils 125, 130 thermal energy is extracted and the cooled fluid is emitted from the bottom of the cooling coils (125, 130) and returned through conduit 120. The fluid directions may be revered if desired. Cooling system 100 extracts thermal energy from the cooling fluid by passing ambient air over the coils 125 and 130 by way of an airflow generating device, such as a fan 102. During periods where the ambient air temperature is sufficiently low or when the load is sufficiently low, air can be drawn through the "dry" evaporative pads 135 and 140 then across cooling coils 125 and 130 via the fan 102 (or other airflow generating device) without the operation of a water recirculation system. Such a method of operation is considered to be operating in a "dry" mode.

In the event that the ambient air temperature is not sufficiently low, or where an increased heat exchange capacity is desired, cooling system 100 can transition from the "dry" mode to a "wet" mode of operation by applying of moisture in the form of an evaporative liquid (e.g., water) to the evaporative cooling pads 135 and 140. When evaporative cooling pads 135 and 140 are wet, they evaporatively cool the air which then passes colder incoming air through cooling coils (125, 130). This increases the amount of heat that can be withdrawn from cooling coils 125 and 130.

Cooling system 100, as well as other embodiments contemplated herein, employ two modes of wet operation. The first, or primary wet mode is considered a water recirculation cycle. The second, or back-up wet mode is considered a once-through cycle. The primary wet mode operates in the water recirculation mode because it conserves evaporative liquid compared to the once-through mode. Thus, under standard operating conditions, this liquid conserving mode is typically sufficient to accomplish the cooling demands. The cooling system 100 is configured to switch into a once-through cycle as a back-up, for example, if the water recirculation mode fails to properly operate. The cooling system 100 switches modes of operation so without introducing any new components.

When transitioning cooling system 100 from the dry to the wet mode, a make-up solenoid valve 170 is activated or opened and the water dump valve 175 is closed. The flow rate from the make-up valve 170 is typically controlled by flow control valve 171 which may be an orifice, pressure regulator or throttle valve. By applying the make-up water to the top of evaporative pads 135 and 140, evaporative pads can be wetted without activating the water recirculation pump 145. In order to ensure that evaporative cooling pads 135 and 140 are sufficiently saturated, a sufficient amount of evaporative liquid is provided to the distribution arrangements 148 and 150 such that the liquid trickles down through the evaporative cooling pads 135 and 140 and runs-off the cooling pads into the respective optional collecting troughs 155 and 160. Optional collecting troughs 155 and 160 act as a temporary and intermediate collection of run-off liquid which is then provided through conduits to the sump 165. In another arrangement, a larger sump may be used and optional troughs 155 and 160 do not exist.

Sump 165 collects the run-off liquid from collecting troughs 155 and 160. Upon collecting enough run-off water to provide a sufficient head of pressure to the intake of water recirculation pump 145 (sensed by float switch 152 detecting that the level of the evaporative liquid is high enough to safely bring on pump 145), pump 145 is activated to recirculate liquid from sump 165 through conduits 146 and 149 to liquid distribution arrangements 148 and 150.

As float switch 152 senses that the evaporative liquid level is high enough to safely bring on pump 145, make-up valve 170 is deactivated or closed. The recirculated external make-up liquid then trickles down through the adiabatic material of the evaporative cooling pads 135 and 140 and is absorbed by the evaporative pads. As ambient air passes through the evaporative pads 135 and 140, the air is cooled by the action of evaporation as the liquid that was initially absorbed by the adiabatic material is then vaporized and converted from liquid to gaseous form.

Since the make-up valve 170 and recirculation water pump 145 communicate with the same conduits, a back pressure flow prevention device, or check valve 147 is used to inhibit make-up liquid from going backwards down through the pump. Likewise, backflow prevention valve network 173 inhibits recirculated liquid from back-flowing into other make-up liquid sources, which may be, for instance as a city water supply.

During the primary recirculation mode, as liquid is depleted from the evaporative air cooling system, the liquid level in sump 165 decreases. When the level is sufficiently low, as sensed by float switch 152, make-up valve 170 opens to introduce replacement make-up water into the system 100 and a make-up timer is started. Once the liquid level in sump 165 rises to a high predetermined level, make-up valve 170 is closed, thereby shutting off the make-up liquid source. If the water level does not rise and the make-up timer expires, the system 100 generates an alarm and the once-through back-up cycle (as discussed in more detail below) is initiated.

A control system continually monitors the operation of the pump 145 and the make-up valve 170 to ensure properly cycling on and off according to the signal from the sump float switch 152. If the control system detects an issue that says that there is a problem with the water recirculation system, the wet mode is transferred to the once-through back-up cycle. The conditions that may be continually monitored include: the water level (e.g., determining whether the water level is insufficient to keep the pump running as determined by float switch 152), the water make-up timer, pump flow switch 216, pump electrical detection switch 220 or sensor, water pad sensor 224 (e.g., determining whether the sensor detects that the evaporative pads are not wet) or a combination of the methods or even other optional methods.

If the water make-up timer times out and the water level has not been made, then the control changes from the water recirculation cycle to the once-through back-up cycle. There are many reasons the make-up valve may fail to bring the water level up in sump 165 including but not limited to a defective make-up valve 170, clogged water flow control 171, a broken pipe, float switch 152 is dirty and stuck in the down position, or drain valve 175 failed to close or is defective. In any of these cases, there is not sufficient water in sump 165 to keep the pump running, thus the wet mode is changed from the water recirculation mode to the once-through mode. In addition to the water make-up timer, any of the water recirculation sensing methods which detect a failure will also change the wet mode from water recirculation mode to the once-through back up cycle.

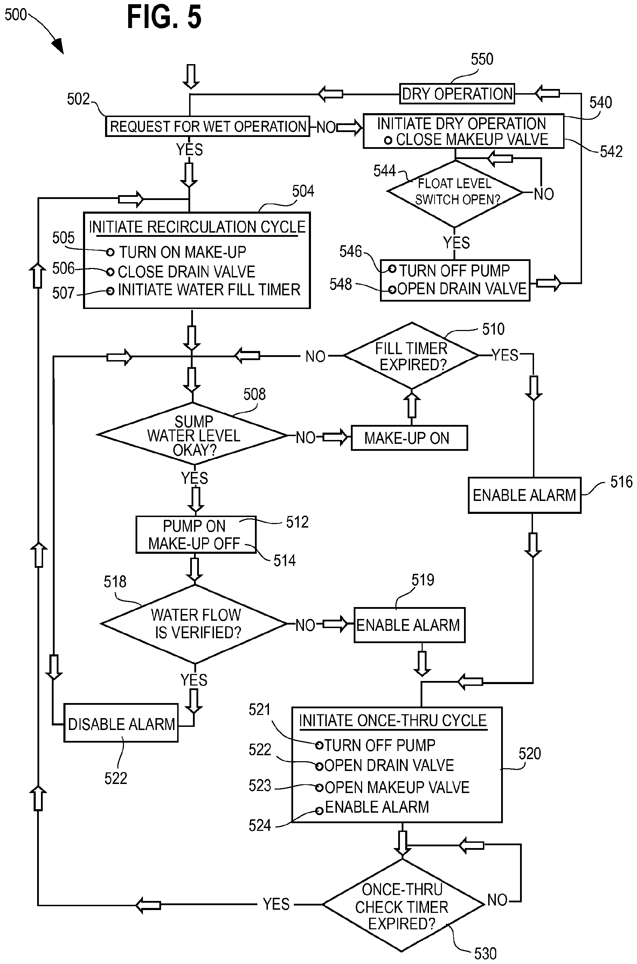

When transitioning the cooling system 100 from the wet water recirculation mode to the once-through wet back-up cycle, the make-up valve 170 is energized, recirculation pump 145 is turned off, sump water dump valve 175 is opened and an alarm is sent to the customer so that a service technician is called to correct whatever may be wrong with the water recirculation system. The logic that the cooling system 100 follows is represented by the diagram detailed in Figure 5.

Cooling system 100 in Figure 1 also employs a "dump cycle" as known in the art such that after a predetermined period of time, which is approximately 12-24 hours pump recirculation mode, pump 145 is turned off and sump drain valve 175 is opened to release the entire contents of the sump 165 to reduce the likelihood of the generation and growth of bacteria and slime in the sump 165.

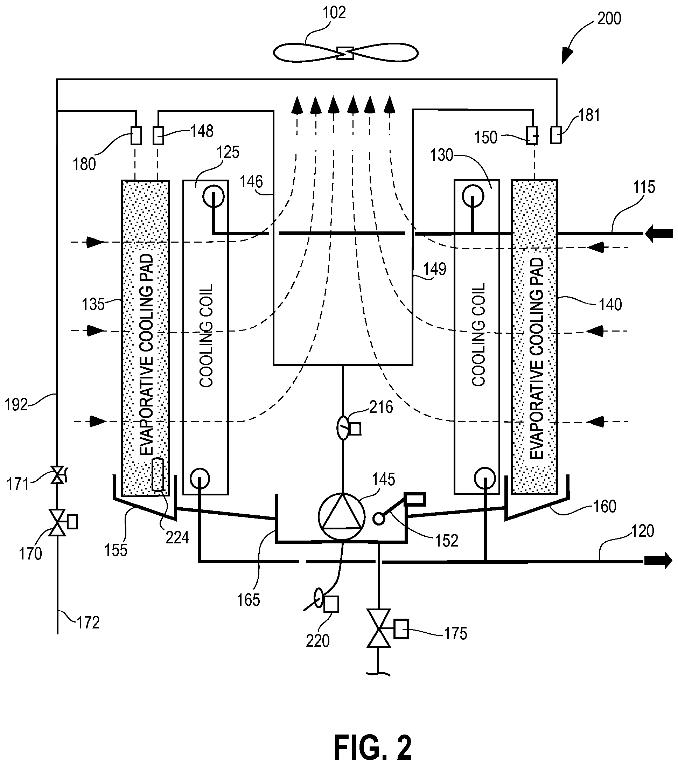

Figure 2 shows a cooling system 200 where a fluid to be cooled or condensed (e.g. water or refrigerant) is passed internally through cooling coils 125, 130 through conduit 115. Many components operates similar to, or the same as the corresponding components identified above with respect to Figure 1, though there are exceptions. In the cooling system 200, make-up valve 170 still delivers liquid to the top of evaporative pads 135 and 140. But here, the liquid it is delivered through a separate conduit 192 that delivers fresh make-up water to water distribution arrangements 180 and 181. Separating the deliveries from pump 145 into separate lines 148 and 150, and the lines 180 and 181 from the make-up valve 170 allows the system 100 to operate without the check valve 147 (shown in Figure 1). This also alleviates there is no need to employ a back-flow preventer valve network 173 (shown in Figure 1).

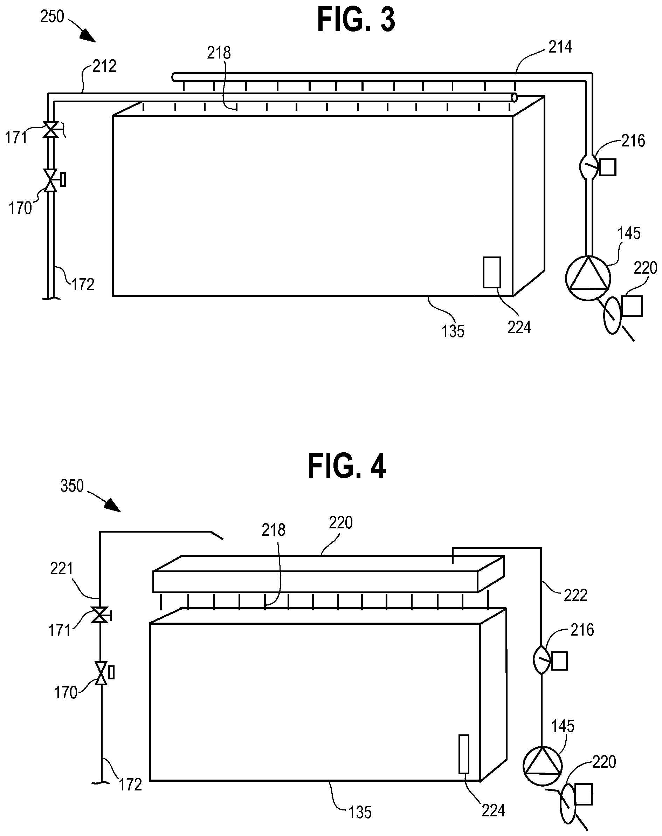

Figure 3 shows a portion of a cooling system 250 with evaporative pads 135 from a side view. In this view, a separate delivery system is shown as individual pipes 212 from make-up valve 170 and a water delivery pipe 214, which is fed from water recirculation pump 145. Individual water delivery pipes 212 and 214 can have orifices, nozzles or holes drilled in them, which delivers water droplets 218 to the top of evaporative pad 135. Further water delivery pipes 212 and 214 can be adjacent to one another or can be positioned one over top of the other depending on the room allowed.

Figure 4 also shows a portion of a cooling system 350 with evaporative pads 135 from a side view. In this view, a separate delivery pipe 221 from make-up valve 170 and a water delivery pipe 222 from recirculation pump 145 drop into gravity water feed basin 220. Gravity feed water basin 220 may have orifices, nozzles or holes to deliver water droplets 218 to the top of evaporative pads 135. Pipe 221 may have a higher point of entry with regard to pipe 222 and also may need to be above gravity feed water basin 220 as required by some municipalities to prevent recirculated water to enter the city water system.

Figure 5 is a flow diagram 500 for a control logic sequence that can be applied by the various examples of cooling systems described herein. It should be noted that there are multiple ways to control the fan speed with both wet and dry evaporative pads as known in the art and that the logic in Figure 5 starts with a request for wetting the evaporative pads. The decision to require wet operation is well known in the art and can be decided by many factors such as ambient air temperature, process fluid temperature, process fluid pressure, a maximum preset fan speed or a combination of these inputs and is not a limitation of the invention.

Referring now to Figure 5, on a request for wet operation 502, that is when the air entering cooling coils needs to be precooled by the evaporative pads and to increase the heat rejected by the system, the water recirculation cycle 504 is initiated. At this point, make-up valve 505 opens to feed water to the top of evaporative pads, water sump drain valve 506 is closed, and a water fill timer 507 is initiated. The control system looks at sump float switch 508 and if the water level is below a predetermined low set point, it checks to see of the water filler timer 510 has expired. If the water filler timer 510 has not expired, then recirculation pump 512 remains off and the make-up valve 514 remains on. The control system 500 continually checks the sump water level 508 until either the water fill timer 510 expires or until sump water level 508 reaches a predetermined high level. If the high water level is reached before the water fill timer 510 has expired, then water recirculation pump 512 is turned on and make-up 514 is turned off. If the water fill timer 510 has expired before sump water level 508 reaches the high level, then an alarm 516 is sent to the customer and the once-through back up cycle 520 is initiated (this mode of operation will be discussed below).

Once water recirculation pump 512 comes on, the control logic checks to see if it appears to be running properly. Proper recirculation pump operation 518 can be verified 518 directly via water flow switch located in the discharge line of water recirculation pump, by pump electrical detection switch or sensor, water pad sensor or other methods described herein. As long as water recirculation pump 512 is on and water flow 518 has been verified, there will be no alarms 519 and the control system 500 will continue to monitor the water level 508 in the sump so that make-up valve 514 can be opened should the water level drop due to evaporation of water in the evaporative pads. This is the normal and primary mode of operation.

At any time when recirculation water pump 512 is turned on and water flow switch 518 shows a loss of water flow, such as with a pump failure, an alarm 519 is enabled and the once-through back-up cycle 520 is initiated. The once-through back up cycle turns off water recirculation pump 521, opens sump drain valve 522, opens make-up valve 523, and sends an alarm 524 to the customer. Now the control system is precooling the air from the evaporative pads by depositing make-up water to the evaporative pads and any run-off water exits the sump drain valve 522. At this point, a once-through check timer 530 is initiated which keeps the system in the once-through back-up cycle for a predetermined but adjustable period. Once the once-through check timer 530 has expired, the control logic 500 will attempt to run water recirculation pump and check for proper operation by initiating 504 the water recirculation mode again.

Referring again, to Figure 5, once the request for wet operation 502 is turned off, and if water recirculation pump was previously running, then the dry operation 540 is initiated and make-up valve 542 is closed, and an attempt is made to use any remaining water in the recirculation system before the water recirculation pump is turned off. The control logic thus looks at sump water level 544 and continues to run water recirculation pump until sump level switch 544 indicates the water level has dropped. Once sump water level switch 544 indicates the water level has dropped, water recirculation pump 546 is turned off and water dump valve 548 is opened. Using this logic uses as much of the recirculation water possible before dumping the remaining water when returning back to the dry mode of operation 550.

In this way, the method 500 of operating a liquid dispensing system involves dispensing liquid over an evaporative pad with a dispenser, collecting run-off liquid from the evaporative pad in a sump, and monitoring parameters associated with the level of liquid within the sump. The method also involves controlling the mode of operation between a recirculation mode and a once-through mode with the controller based at least in part on the monitored parameters. For instance, the monitored parameters can include the level of evaporative liquid within the sump, the operating capabilities and/or efficiencies of the pump, the drain valve position of the sump, the amount of time that the system has been operating in a once-through mode versus a recirculation mode, among other parameters. When operating in the recirculation mode, the controller causes the system to deliver evaporative liquid from the sump to the dispenser. When operating in the once-through mode, the controller causes the system to deliver liquid from an inlet to the dispenser.

## Claims

1. A liquid distribution system for a cooling device comprising:
- an inlet (172) configured to allow evaporative liquid into the liquid distribution system;
- a dispenser (148,50) positioned to distribute evaporative liquid over an evaporative pad of the cooling device;
- a make-up valve (170) that regulates the flow of evaporative liquid between the inlet and the dispenser;
- a sump (165) positioned to collect evaporative liquid that runs off the evaporative pad;
- and a pump (45) in fluid communication with the sump and the dispenser; and
- a controller in communication with the make-up valve and the pump,
**characterised in that** the controller is configured to control the liquid distribution system to operate among one of a plurality of operating modes, the plurality of operating modes including a recirculation mode and a once-through mode,
wherein the recirculation mode of operation involves operating the make-up valve (170) to maintain a sufficient water level in the sump (165) and operating the pump (145) to distribute evaporative liquid from the sump (145) to the dispenser (148,150), and
wherein the once-through mode of operation involves disabling the pump (145) and opening the make-up valve (170) to allow evaporative liquid to be drawn from the inlet (172) to the dispenser (148,150).

2. A cooling system (100) comprising:
- a cooling coil (125,130) configured to pass an internal fluid;
- an evaporative pad (135,140) positioned relative to a cooling coil (125,130);
- an airflow generator (102) arranged to draw air through the evaporative pad (135,140) and over the cooling coil (125,13a); and
- a liquid distribution system according to claim 1, the controller further being in communication with the airflow generator (102) and comprising a processing device.

3. The system of claim 1 or 2, wherein the sump (165) includes drain valve (175) and a level sensor, each in communication with the controller, and
wherein the controller is configured to monitor the level of evaporative liquid in the sump (165) via the level sensor, and
wherein the controller is configured to select a particular operating mode among the plurality of operating modes based at least in part the monitored level of evaporative liquid in the sump (165).

4. The system of claim 3, wherein the controller, in the water recirculation mode of operation, is configured to close the drain valve (175) of the sump and operate a fill timer.

5. The system of claim 4, wherein the controller is configured to switch operating modes from the recirculation to the once-through mode where the level of evaporative liquid in the sump (165) does not meet a predetermined level.

6. The system of claim 5, wherein the controller is configured to operate an alarm where the fill timer indicates that a predetermined amount of time has elapsed and the level of evaporative liquid in the sump (165) has not reached the predetermined level.

7. The system of any of claims 3 to 6, wherein the controller is configured to switch from the recirculation mode back to a dry mode, wherein the controller, while operating in the dry mode, is configured to effect operation of the pump (145) until the monitored level of evaporative fluid within the sump (165) has reaches a predetermined level.

8. The system of any of claims 3 to 7, wherein the controller is configured to enable an alarm and start a once-through check timer in response to switching to the once-through mode, and wherein the controller is configured to automatically attempt to run the recirculation mode in response to the once-through check timer expires.

9. The liquid distribution system of any preceding claim, further comprising an operation monitor configured to monitor operation of the pump (145), optionally wherein the operation monitor comprises a flow switch (216) in a discharge line of the pump.

10. The system of claim 9, wherein the controller is configured to operate an alarm and execute operation of the once-through mode of operation in response to the operation monitor detecting that the pump (145) is not operating properly.

11. The system of any preceding claim, wherein the dispenser (148,150) is in fluid connection with the sump (165) and the inlet (172), and further comprising a check valve (147) in line between the pump (145) and the dispenser (148,150).

12. The system of any preceding claim, wherein the dispenser (148,150) includes a first dispenser (148,150) in fluid communication with the pump (145) and with the inlet (172) and a second dispenser (180,181) in fluid communication with the make-up valve and the inlet (172), optionally wherein a conduit establishing fluid communication between the pump (145) and the first dispenser (148,150) is without a check valve.

13. The system of any preceding claim, wherein when the controller switches from the water recirculation mode back to the dry mode, the water recirculation pump (145) remains on until the sump (165) water level reaches a predetermined level.

14. The system of any preceding claim, wherein when the controller switches to the once-through mode it enables an alarm and starts a once through check timer and when this timer expires, the controller will automatically attempt to run the water recirculation mode.

15. A method of operating a liquid dispensing system according to any of claims 1 to 14 between a recirculation
mode and a once-through mode, the method comprising:
- dispensing liquid over an evaporative pad (135,140) with a dispenser (148,150);
- collecting run-off liquid from the evaporative (135,140) pad in a sump (165); and
- monitoring parameters associated with the level of liquid within the sump (165); and
- controlling the mode of operation between a recirculation mode and a once-through mode with the controller based at least in part on the monitored parameters,
wherein operating in the recirculation mode involves delivering liquid from the sump (165) to the dispenser (148,150), and
wherein operating in the once-through mode involves delivering liquid from an inlet (172) to the dispenser (148,150).

## Patentansprüche

1. Flüssigkeitsverteilungssystem für eine Kühlvorrichtung, umfassend:
- einen Einlass (172), der konfiguriert ist, um Verdunstungsflüssigkeit in das Flüssigkeitsverteilungssystem einzulassen;
- einen Spender (148, 50), der angeordnet ist, um Verdunstungsflüssigkeit über eine Verdunstungslage der Kühlvorrichtung zu verteilen;
- ein Nachfüllventil (170), das den Fluss der Verdunstungsflüssigkeit zwischen dem Einlass und dem Spender reguliert;
- einen Sumpf (165), der angeordnet ist, um Verdunstungsflüssigkeit aufzufangen, die von der Verdunstungslage abläuft;
- und eine Pumpe (45), die in Fluidverbindung mit dem Sumpf und dem Spender steht; und
- eine Steuerung, die mit dem Nachfüllventil und der Pumpe in Verbindung steht,
**dadurch gekennzeichnet, dass** die Steuerung konfiguriert ist, um das Flüssigkeitsverteilungssystem zu steuern, um in einem von einer Vielzahl von Betriebsmodi zu arbeiten, wobei die Vielzahl von Betriebsmodi einen Rückführmodus und einen Durchlaufmodus beinhaltet,
wobei der Rückführmodus des Betriebs das Betreiben des Nachfüllventils (170) zum Aufrechterhalten eines ausreichenden Wasserpegels im Sumpf (165) und das Betreiben der Pumpe (145) zum Verteilen von Verdunstungsflüssigkeit aus dem Sumpf (145) zum Spender (148, 150) beinhaltet, und
wobei der Durchlaufmodus des Betriebs das Abschalten der Pumpe (145) und das Öffnen des Nachfüllventils (170) beinhaltet, um zu ermöglichen, dass Verdunstungsflüssigkeit vom Einlass (172) zum Spender (148, 150) gezogen wird.

2. Kühlsystem (100), umfassend:
- eine Kühlschlange (125, 130), die konfiguriert ist, um ein internes Fluid durchzulassen;
- eine Verdunstungslage (135, 140), die relativ zu einer Kühlschlange (125, 130) angeordnet ist;
- einen Luftstromgenerator (102), der angeordnet ist, um Luft durch die Verdunstungslage (135, 140) und über die Kühlschlange (125, 13a) zu ziehen; und
- ein Flüssigkeitsverteilungssystem nach Anspruch 1,
wobei die Steuerung weiter mit dem Luftstromgenerator (102) in Verbindung steht und eine Verarbeitungsvorrichtung umfasst.

3. System nach Anspruch 1 oder 2, wobei der Sumpf (165) ein Ablassventil (175) und einen Pegelsensor beinhaltet, die jeweils mit der Steuerung in Verbindung stehen, und
wobei die Steuerung so konfiguriert ist, dass sie den Pegel der Verdunstungsflüssigkeit im Sumpf (165) über den Pegelsensor überwacht, und
wobei die Steuerung konfiguriert ist, um einen bestimmten Betriebsmodus aus der Vielzahl von Betriebsmodi auszuwählen, der zumindest teilweise auf dem überwachten Pegel der Verdunstungsflüssigkeit in dem Sumpf (165) basiert.

4. System nach Anspruch 3, wobei die Steuerung im Wasserrückführmodus des Betriebs konfiguriert ist, um das Ablassventil (175) des Sumpfes zu schließen und einen Füllzeitgeber zu betreiben.

5. System nach Anspruch 4, wobei die Steuerung konfiguriert ist, um die Betriebsmodi von der Rückführung in den Durchlaufmodus umzuschalten, wenn der Pegel der Verdunstungsflüssigkeit im Sumpf (165) einen vorgegebenen Pegel nicht erreicht.

6. System nach Anspruch 5, wobei die Steuerung konfiguriert ist, um einen Alarm auszulösen, wenn der Füllzeitgeber anzeigt, dass eine vorbestimmte Zeitspanne verstrichen ist und der Pegel der Verdunstungsflüssigkeit im Sumpf (165) den vorbestimmten Pegel nicht erreicht hat.

7. System nach einem der Ansprüche 3 bis 6, wobei die Steuerung konfiguriert ist, um von dem Rückführmodus zurück in einen Trockenmodus zu schalten, wobei die Steuerung, während sie im Trockenmodus arbeitet, konfiguriert ist, um den Betrieb der Pumpe (145) zu bewirken, bis der überwachte Pegel des Verdunstungsfluids im Sumpf (165) einen vorbestimmten Pegel erreicht hat.

8. System nach einem der Ansprüche 3 bis 7, wobei die Steuerung konfiguriert ist, um als Reaktion auf das Umschalten in den Durchlaufmodus einen Alarm zu aktivieren und einen Durchlaufprüfungszeitgeber zu starten, und wobei die Steuerung konfiguriert ist, um als Reaktion auf den Ablauf des Durchlaufprüfungszeitgebers automatisch zu versuchen, den Rücklaufmodus zu betreiben.

9. Flüssigkeitsverteilungssystem nach einem vorstehenden Anspruch, weiter umfassend einen Betriebsüberwacher, der konfiguriert ist, um den Betrieb der Pumpe (145) zu überwachen, wobei der Betriebsüberwacher gegebenenfalls einen Strömungsschalter (216) in einer Auslassleitung der Pumpe umfasst.

10. System nach Anspruch 9, wobei die Steuerung konfiguriert ist, um, als Reaktion auf den Betriebsüberwacher, der erkennt, dass die Pumpe (145) nicht ordnungsgemäß arbeitet, einen Alarm auszulösen und den Betrieb des Durchlaufmodus des Betriebs auszuführen.

11. System nach einem vorstehenden Anspruch, wobei der Spender (148, 150) in Fluidverbindung mit dem Sumpf (165) und dem Einlass (172) steht, und weiter ein Rückschlagventil (147) in der Leitung zwischen der Pumpe (145) und dem Spender (148, 150) umfasst.

12. System nach einem vorstehenden Anspruch, wobei der Spender (148, 150) einen ersten Spender (148, 150), der in Fluidverbindung mit der Pumpe (145) und mit dem Einlass (172) steht, und einen zweiten Spender (180, 181), der in Fluidverbindung mit dem Nachfüllventil und dem Einlass (172) steht, umfasst, wobei gegebenenfalls eine Leitung, die eine Fluidverbindung zwischen der Pumpe (145) und dem ersten Spender (148, 150) herstellt, ohne ein Rückschlagventil ist.

13. System nach einem vorstehenden Anspruch, wobei die Wasserrückführpumpe (145) eingeschaltet bleibt, bis der Wasserpegel im Sumpf (165) einen vorgegebenen Pegel erreicht, wenn die Steuerung vom Wasserrückführmodus zurück in den Trockenmodus schaltet.

14. System nach einem vorstehenden Anspruch, wobei die Steuerung, wenn sie in den Durchlaufmodus umschaltet, einen Alarm aktiviert und einen Durchlaufprüfungszeitgeber startet, und wenn dieser Zeitgeber abläuft, die Steuerung automatisch versucht, den Wasserrückführmodus zu starten.

15. Verfahren zum Betreiben eines Flüssigkeitsabgabesystems nach einem der Ansprüche 1 bis 14 zwischen einem Rückführmodus und einem Durchlaufmodus, wobei das Verfahren umfasst:
- Abgeben von Flüssigkeit über eine Verdunstungslage (135, 140) mit einem Spender (148, 150);
- Sammeln von ablaufender Flüssigkeit von der Verdunstungslage (135, 140) in einem Sumpf (165); und
- Überwachen von Parametern, die mit dem Flüssigkeitspegel in dem Sumpf (165) verbunden sind; und
- Steuern des Betriebsmodus zwischen einem Rückführmodus und einem Durchlaufmodus, wobei die Steuerung zumindest teilweise auf den überwachten Parametern basiert,
wobei der Betrieb in dem Rückführmodus die Abgabe von Flüssigkeit von dem Sumpf (165) an den Spender (148, 150) beinhaltet, und
wobei der Betrieb im Durchlaufmodus die Abgabe von Flüssigkeit von einem Einlass (172) an den Spender (148, 150) beinhaltet.

## Revendications

1. Système de distribution de liquide pour un dispositif de refroidissement comprenant:
- une entrée (172) configurée pour admettre du liquide d'évaporation dans le système de distribution de liquide ;
- un distributeur (148, 50) positionné pour distribuer du liquide d'évaporation sur un tampon d'évaporation du dispositif de refroidissement ;
- une vanne d'appoint (170) qui régule le flux de liquide d'évaporation entre l'entrée et le distributeur ;
- un carter (165) positionné pour collecter du liquide d'évaporation qui fuit du tampon d'évaporation ;
- et une pompe (45) en communication fluidique avec le carter et le distributeur ; et
- un dispositif de commande en communication avec la vanne d'appoint et la pompe,
**caractérisé en ce que** le dispositif de commande est configuré pour commander le fonctionnement du système de distribution de liquide parmi un d'une pluralité de modes de fonctionnement, la pluralité de modes de fonctionnement incluant un mode de recirculation et un mode de passage unique,
dans lequel le mode de fonctionnement de recirculation implique l'actionnement de la vanne d'appoint (170) pour maintenir un niveau d'eau suffisant dans le carter (165) et l'actionnement de la pompe (145) pour distribuer du liquide d'évaporation du carter (145) au distributeur (148, 150), et
dans lequel le mode de fonctionnement de passage unique implique la désactivation de la pompe (145) et l'ouverture de la vanne d'appoint (170) pour permettre au liquide d'évaporation d'être aspiré de l'entrée (172) au distributeur (148, 150).

2. Système de refroidissement (100) comprenant :
- une bobine de refroidissement (125, 130) configurée pour faire passer un fluide interne ;
- un tampon d'évaporation (135, 140) positionné par rapport à une bobine de refroidissement (125, 130) ;
- un générateur de flux d'air (102) agencé pour aspirer de l'air à travers le tampon d'évaporation (135, 140) et sur la bobine de refroidissement (125, 13a) ; et
- un système de distribution de liquide selon la revendication 1,
le dispositif de commande étant en outre en communication avec le générateur de flux d'air (102) et
comprenant un dispositif de traitement.

3. Système de refroidissement selon la revendication 1 ou 2, dans lequel le carter (165) inclut une soupape de drainage (175) et un capteur de niveau, chacun étant en communication avec le dispositif de commande, et
dans lequel le dispositif de commande est configuré pour surveiller le niveau de liquide d'évaporation dans le carter (165) via le capteur de niveau, et
dans lequel le dispositif de commande est configuré pour sélectionner un mode de fonctionnement particulier parmi la pluralité de modes de fonctionnement sur la base au moins en partie du niveau surveillé de liquide d'évaporation dans le carter (165).

4. Système selon la revendication 3, dans lequel le dispositif de commande, dans le mode de fonctionnement de recirculation d'eau est configuré pour fermer la soupape de drainage (175) du carter et actionner une minuterie de remplissage.

5. Système selon la revendication 4, dans lequel le dispositif de commande est configuré pour commuter des modes de fonctionnement du mode de recirculation au mode de passage unique où le niveau de liquide d'évaporation dans le carter (165) ne satisfait pas à un niveau prédéterminé.

6. Système selon la revendication 5, dans lequel le dispositif de commande est configuré pour actionner une alarme où la minuterie de remplissage indique qu'une quantité de temps prédéterminée s'est écoulée et le niveau de liquide d'évaporation dans le carter (165) n'a pas atteint le niveau prédéterminé.

7. Système selon l'une quelconque des revendications 3 à 6, dans lequel le dispositif de commande est configuré pour commuter en arrière du mode de recirculation à un mode à sec, dans lequel le dispositif de commande tout en fonctionnant dans le mode à sec, est configuré pour effectuer l'actionnement de la pompe (145) jusqu'à ce que le niveau surveillé de fluide d'évaporation dans le carter (165) atteigne un niveau prédéterminé.

8. Système selon l'une quelconque des revendications 3 à 7, dans lequel le dispositif de commande est configuré pour activer une alarme et lancer une minuterie de vérification de passage unique en réponse à la commutation au mode de passage unique, et dans lequel le dispositif de commande est configuré pour essayer automatiquement d'exécuter le mode de recirculation en réponse à l'expiration de la minuterie de vérification de passage unique.

9. Système de distribution de liquide selon l'une quelconque des revendications précédentes, comprenant en outre un moniteur de fonctionnement configuré pour surveiller le fonctionnement de la pompe (145), dans lequel le moniteur de fonctionnement comprend facultativement un commutateur de flux (216) dans une ligne de décharge de la pompe.

10. Système selon la revendication 9, dans lequel le dispositif de commande est configuré pour actionner une alarme et exécuter un fonctionnement du mode de fonctionnement de passage unique en réponse à la détection par le moniteur de fonctionnement que la pompe (145) ne fonctionne pas correctement.

11. Système selon l'une quelconque des revendications précédentes, dans lequel le distributeur (148, 150) est en liaison fluidique avec le carter (165) et l'entrée (172), et comprenant en outre un clapet antiretour (147) en ligne entre la pompe (145) et le distributeur (148, 150).

12. Système selon l'une quelconque des revendications précédentes, dans lequel le distributeur (148, 150) inclut un premier distributeur (148, 150) en communication fluidique avec la pompe (145) et avec l'entrée (172) et un second distributeur (180, 181) en communication fluidique avec la vanne d'appoint et l'entrée (172), dans lequel un conduit établissant facultativement une communication fluidique entre la pompe (145) et le premier distributeur (148, 150) est sans clapet antiretour.

13. Système selon l'une quelconque des revendications précédentes, dans lequel lorsque le dispositif de commande commute en arrière du mode de recirculation d'eau au mode à sec, la pompe de recirculation d'eau (145) reste en marche jusqu'à ce que le niveau d'eau de carter (165) atteigne un niveau prédéterminé.

14. Système selon l'une quelconque des revendications précédentes, dans lequel lorsque le dispositif de commande commute au mode de passage unique, il active une alarme et lance une minuterie de vérification de passage unique et lorsque cette minuterie expire, le dispositif de commande essaie automatiquement d'exécuter le mode de recirculation d'eau.

15. Procédé de fonctionnement d'un système de distribution de liquide selon l'une quelconque des revendications 1 à 14 entre un mode de recirculation et un mode de passage unique, le procédé comprenant :
- la distribution de liquide sur un tampon d'évaporation (135, 140) avec un distributeur (148, 150) ;
- la collecte de liquide de fuite du tampon d'évaporation (135, 140) dans un carter (165) ; et
- la surveillance de paramètres associés au niveau de liquide dans le carter (165) ; et
- la commande du mode de fonctionnement entre un mode de recirculation et un mode de passage unique avec le dispositif de commande sur la base au moins en partie des paramètres surveillés,
dans lequel le fonctionnement dans le mode de recirculation implique la fourniture de liquide du carter (165) au distributeur (148, 150), et
dans lequel le fonctionnement dans le mode de passage unique implique la fourniture de liquide d'une entrée (172) au distributeur (148, 150).
